(19) Europäisches Patentamt
European Patent Office
Office européen des brevets

(11) **EP 3 173 976 A1**

(12) **EUROPEAN PATENT APPLICATION**

(43) Date of publication:
**31.05.2017 Bulletin 2017/22**

(51) Int Cl.:
**G06K 9/46** (2006.01)          **G06K 9/52** (2006.01)

(21) Application number: **16199236.7**

(22) Date of filing: **17.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2015   CN 201510827886**

(71) Applicant: **Xiaomi Inc.**
**Beijing 100085 (CN)**

(72) Inventors:
• **LONG, Fei**
  **Haidian District,**
  **Beijing 100085 (CN)**
• **CHEN, Zhijun**
  **Haidian District,**
  **Beijing 100085 (CN)**
• **ZHANG, Tao**
  **Haidian District,**
  **Beijing 100085 (CN)**

(74) Representative: **Delumeau, François Guy et al**
**Cabinet Beau de Loménie**
**158, rue de l'Université**
**75340 Paris Cedex 07 (FR)**

(54) **METHOD AND DEVICE FOR EXTRACTING CHARACTERISTIC**

(57)     Method and device for extracting characteristics are provided in the disclosure, which belongs to the technical field of image processing. The method for extracting characteristics includes: segmenting (102) an image into a plurality of blocks, wherein each block comprises a plurality of cells; converting (104) each cell from a spatial domain to a frequency domain; and extracting (106) a Histogram of Oriented Gradient (HOG) characteristic of the image in the frequency domain..

```
┌─────────────────────────────────────────────────┐
│  segmenting an image into a plurality of blocks, │ 102
│  wherein each block comprises a plurality of cells│
└─────────────────────────────────────────────────┘
                        │
                        ▼
┌─────────────────────────────────────────────────┐
│  converting each cell from a spatial domain to a │ 104
│  frequency domain                                │
└─────────────────────────────────────────────────┘
                        │
                        ▼
┌─────────────────────────────────────────────────┐
│  extracting a Histogram of Oriented Gradient (HOG)│ 106
│  characteristic of the image in the frequency domain│
└─────────────────────────────────────────────────┘
```

**FIG. 1**

EP 3 173 976 A1

**Description**

**TECHNICAL FIELD**

The present disclosure generally relates to image processing, and more particularly to a method and a device for extracting characteristics.

**BACKGROUND**

Image detection and identification is an important research field in computer vision. The most common way in the technology of the image detection and identification is to extract some feature of an image to detect and identify the image.

In the related art, an image is detected and identified by extracting a Histogram of Oriented Gradient (HOG) characteristic of the image. The method for extracting the HOG characteristic is as follow: calculating a gradient of each pixel in an image; segmenting the image into a plurality of cells, wherein each cell includes a plurality of pixels, and every adjacent n cells compose a block; counting the Histogram of Gradient of all the pixels in each cell, and obtaining the HOG characteristic of each block based on the Histogram of Gradient of all the cells in the block; and counting the HOG characteristics of all the blocks in the image to obtain the HOG characteristic of the image.

**SUMMARY**

In view of the fact in related arts, a method and device for extracting characteristics is provided in the disclosure. The method is as follow.

According to a first aspect, the invention relates to a method for extracting characteristics. The method includes: segmenting an image into a plurality of blocks, each block including a plurality of cells; converting each cell from a spatial domain to a frequency domain; and extracting a Histogram of Oriented Gradient (HOG) characteristic of the image in the frequency domain.

In one embodiment, the step of converting each cell from a spatial domain to a frequency domain includes: performing a discrete cosine transform (DCT) on each cell.

In one embodiment, the step of converting each cell from a spatial domain to a frequency domain includes: performing a discrete Fourier transform (DFT) on each cell.

In one embodiment, the step of extracting a Histogram of Oriented Gradient (HOG) characteristic of the image in the frequency domain includes: calculating a gradient magnitude and a gradient direction of each cell in the frequency domain to get a descriptor of each cell; counting respective descriptor of each block in the frequency domain to get a HOG characteristic of each block; and counting the HOG characteristic of each block of the image in the frequency domain to get the HOG characteristic of the image.

In one embodiment, the step of counting the HOG characteristic of each block of the image to get the HOG characteristic of the image includes: cascading the HOG characteristic of each block in the image into a matrix to get the HOG characteristic of the image, wherein each column of the matrix represents the HOG characteristic of one of the blocks.

In one embodiment, the step of counting the HOG characteristic of each block of the image to get the HOG characteristic of the image includes: adjusting the HOG characteristic of each block in the image from an initial L*1-dimensional vector to an M*N matrix, wherein each block includes M*N pixels, L=M*N; and obtaining the HOG characteristic of the image based on the adjusted HOG characteristic of each block and the corresponding position of each block in the image.

In one embodiment, the method further includes: normalizing the image to get an image having a predefined magnitude.

According to a second aspect, the invention relates to a device for extracting characteristics is provided. The device includes: a segmentation module configured to segment an image into a plurality of blocks, wherein each block includes a plurality of cells; a conversion module configured to convert each cell from a spatial domain to a frequency domain; and an extraction module configured to extract a Histogram of Oriented Gradient (HOG) characteristic of the image in the frequency domain.

In one embodiment, the conversion module is configured to perform a discrete cosine transform (DCT) on each cell.

In one embodiment, the conversion module is configured to perform a discrete Fourier transform (DFT) on each cell.

In one embodiment, the extraction module includes: a calculation sub-module configured to calculate a gradient magnitude and a gradient direction of each cell in the frequency domain to get a descriptor of each cell; a first counting sub-module configured to count respective descriptor of each block in the frequency domain to get a HOG characteristic of each block; and a second counting sub-module configured to count the HOG characteristic of each block of the image in the frequency domain to get the HOG characteristic of the image.

In one embodiment, the second counting sub-module is configured to cascade the HOG characteristic of each block in the image into a matrix to get the HOG characteristic of the image, wherein each column of the matrix represents the HOG characteristic of one of the blocks.

In one embodiment, the second counting sub-module includes: an adjustment sub-module configured to adjust the HOG characteristic of each block in the image from an initial L*1-dimensional vector to an M*N matrix, wherein each block includes M*N pixels, L=M*N; and a characteristic extraction sub-module configured to obtain the HOG characteristic of the image based on the adjusted HOG characteristic of each block and the corresponding position of each block in the image.

In one embodiment, the device further includes: a processing module configured to normalize the image to get an image having a predefined magnitude.

According to a third aspect, the invention relates to a device for extracting characteristics. The device includes: a processor; a memory for storing instructions executable by the processor; wherein the processor is configured to: segment an image into a plurality of blocks, each block including a plurality of cells; convert each cell from a spatial domain to a frequency domain; and extract a Histogram of Oriented Gradient (HOG) characteristic of the image in the frequency domain.

The embodiments of the disclosure may provide at least some of the following beneficial effects: by segmenting an image into a plurality of blocks, each block including a plurality of cells; converting each cell from a spatial domain to a frequency domain; and extracting a Histogram of Oriented Gradient (HOG) characteristic of the image in the frequency domain; it can solve the problems in related art that the detection ratio and accuracy is relatively low in pattern recognition due to direct calculation of the spatial domain of the image in the procedure of extracting HOG characteristics; and it can achieve the effects of improving the detection ratio and accuracy in pattern recognition by extracting the HOG characteristics in the frequency domain.

It is to be understood that both the forgoing general description and the following detailed description are exemplary only, and are not restrictive of the present disclosure.

## BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

FIG. 1 is a flow chart illustrating a method for extracting characteristics according to an exemplary embodiment.
FIG. 2A is a flow chart illustrating a method for extracting characteristics according to another exemplary embodiment.
FIG. 2B is a schematic diagram illustrating a method for segmenting an image according to an exemplary embodiment.
FIG. 2C is a schematic diagram illustrating an image segmentation according to another exemplary embodiment.
FIG. 2D is a schematic diagram illustrating counted HOG characteristics in a block according to an exemplary embodiment.
FIG. 3A is a flow chart illustrating a method for extracting characteristics according to an exemplary embodiment.
FIG. 3B is schematic diagram illustrating counted HOG characteristics of an image according to an exemplary embodiment.
FIG. 4 is a block diagram illustrating a device for extracting characteristics according to an exemplary embodiment.
FIG. 5 is a block diagram illustrating a device for extracting characteristics according to another exemplary embodiment.
FIG. 6 is a block diagram illustrating sub-modules of a device for extracting characteristics according to an exemplary embodiment.
FIG. 7 is a block diagram illustrating a device for extracting characteristics according to another exemplary embodiment.

## DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the disclosure.

Instead, they are merely examples of devices and methods consistent with aspects related to the disclosure as recited in the appended claims.

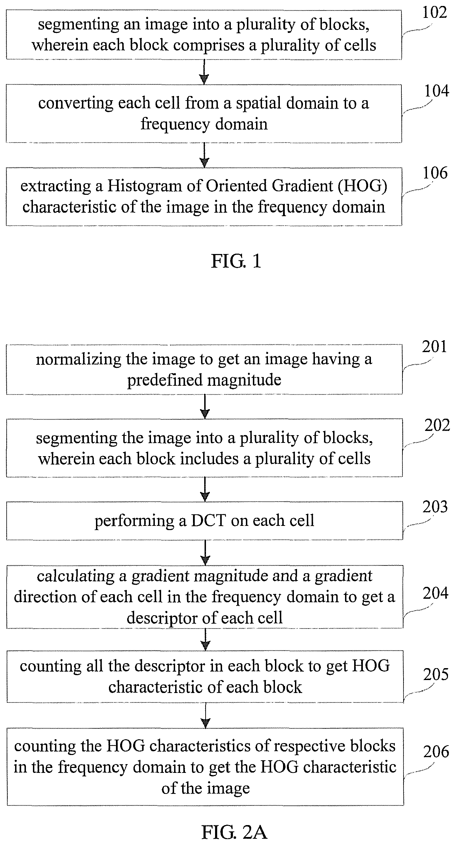

FIG. 1 is a flow chart illustrating a method for extracting characteristics according to an exemplary embodiment. As shown in FIG. 1, the embodiment takes the method used in the hardware of pattern recognition as an example, and the method may include the following steps.

In step 102, an image is segmented into a plurality of blocks, wherein each block includes a plurality of cells.

In step 104, each cell is converted from a spatial domain to a frequency domain.

Each cell is converted so that the image is converted from a spatial domain to a frequency domain.

In step 106, a Histogram of Oriented Gradient (HOG) characteristic of the image in the frequency domain is extracted.

The HOG characteristic of the image is extracted in the frequency domain.

In summary, in the method for extracting characteristics according to the embodiment of the disclosure, by segmenting an image into a plurality of blocks, each block including a plurality of cells; converting each cell from a spatial domain to a frequency domain; and extracting a Histogram of Oriented Gradient (HOG) characteristic of the image in the frequency domain; it can solve the problems in related art that the detection ratio and accuracy is relatively low in pattern recognition due to direct calculation of the spatial domain of the image in the procedure of extracting HOG characteristics; and it can achieve the effects of improving the detection ratio and accuracy in pattern recognition by extracting the HOG characteristics in the frequency domain.

FIG. 2A is a flow chart illustrating a method for extracting characteristics according to another exemplary embodiment. As shown in FIG. 2A, the embodiment takes the method used in the hardware of pattern recognition as an example, and the method may include the following steps.

In step 201, the image is normalized to get an image having a predefined magnitude.

In the pattern recognition, it generally involves extracting characteristics from a plurality of images. Before extracting characteristics from the image, a terminal firstly normalizes the image so that the images having different magnitudes may be transformed to the images having a predefined magnitude for purpose of processing uniformly the images.

In step 202, the image is segmented into a plurality of blocks, wherein each block includes a plurality of cells.

Alternatively, the terminal segmenting the normalized image may include: segmenting the image into a plurality of blocks, and then segmenting each block into a plurality of cells.

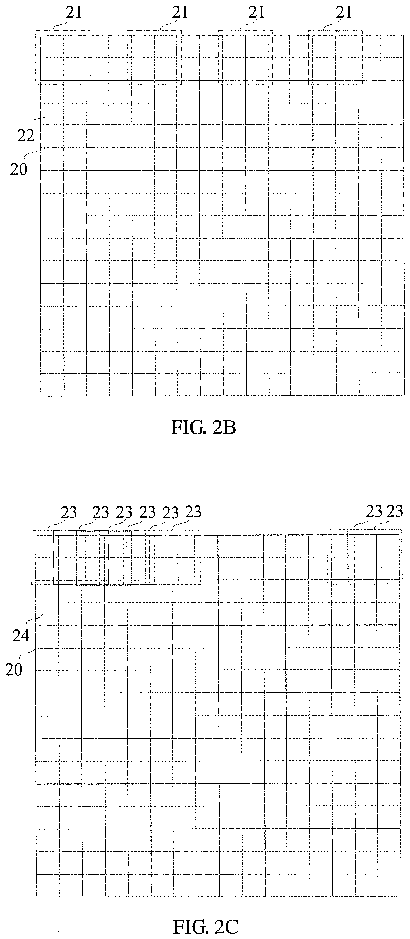

Alternatively, the terminal segmenting the normalized image may include: segmenting the image into a plurality of cells, and then composing a block by the neighboring cells, wherein each block includes a plurality of cells, for example, a block may be composed of four pairwise adjacent cells shaped like the shape of block 21 as shown in Fig. 2B.

In the procedure of segmenting the image in the embodiment, the order of segmenting the image into blocks and segmenting the image into cells is not specifically limited. The image may be firstly segmented into blocks and then the blocks are segmented into cells, or the image may be firstly segmented into cells and then the cells compose respective block.

In the embodiment, it is not specifically limited whether there is an overlap between the segmented blocks of the image. There may have an overlap between the blocks or there may not have an overlap between the blocks.

For example, an image 20 with 128 pixels * 128 pixels may be firstly segmented into blocks 21 with 16 pixels * 16 pixels, wherein the blocks do not overlap with each other, and then each of blocks 21 with 16 pixels * 16 pixels is segmented into cells 22 with 8 pixels * 8 pixels, so the image includes 8 * 8=64 blocks 21 having no overlap, and each block includes 2 * 2=4 cells, as shown in FIG. 2B.

For example, an image with 128 pixels * 128 pixels may be firstly segmented into blocks 23 with 16 pixels * 16 pixels, wherein the blocks have overlap, and then each of blocks 23 with 16 pixels * 16 pixels is segmented into cells 24 with 8 pixels * 8 pixels, so the image includes 16 * 16=256 blocks 23 having overlaps, and each block includes 2 * 2=4 cells, as shown in FIG. 2C.

In step 203, a discrete cosine transform (DCT) is performed on each cell.

For each cell of the image, if a matrix $A$ composed of pixels of each cell has a magnitude of M pixels * N pixels, the discrete cosine transform (DCT) coefficient of the matrix $A$ is as the following formula:

$$B_{pq} = \alpha_p \alpha_q \sum_{m=0}^{M-1} \sum_{n=0}^{N-1} A_{mn} \cos\frac{\pi(2m+1)p}{2M} \cos\frac{\pi(2n+1)q}{2N}$$

wherein $\alpha_p = \begin{cases} 1/\sqrt{M}, p = 0 \\ \sqrt{2/M}, 1 \le p \le M-1 \end{cases}$, $\alpha_q = \begin{cases} 1/\sqrt{N}, q = 0 \\ \sqrt{2/N}, 1 \le q \le N-1 \end{cases}$, $B_{p\cdot q}$ is the DCT coefficient of the matrix A, p=0,1,2... ,M-1, m=0,1,2 ... ,M-1, q=0,1,2 ... ,N-1, n=0,1,2... ,N-1.

The DCT is performed on each cell of the image so that the image is converted from a spatial domain to a frequency domain.

Alternatively, the terminal performs a discrete Fourier transform (DFT) on each cell.

For each cell of the image, if each cell has a magnitude of M pixels * N pixels, the function of pixels (x, y) is f(x, y), the discrete cosine transform (DFT) coefficient F(u, v) of the function f(x, y) is as the following formula:

$$F(u, v) = \frac{1}{MN} \sum_{x=0}^{M-1} \sum_{y=0}^{N-1} f(x, y) e^{-j2\pi(ux/M + vy/N)}$$

wherein u=0,1,2...,M-1, v=0,1,2...,N-1.

The terminal performs DFT on each cell of the image so that the image is converted from the spatial domain to the frequency domain.

In step 204, a gradient magnitude and a gradient direction of each cell in the frequency domain is calculated to get a descriptor of each cell.

The terminal calculates a transverse gradient and a longitudinal gradient of each pixel in each cell, on which the DCT or DFT is performed, by using a gradient operator. For example, the commonly used gradient operators are listed in the following table:

Table 1

| Mask type | Central vector | Non-central vector | Attention correction vector | diagonal | Sobel operator |
|---|---|---|---|---|---|
| operator | [10 -1] | [1 -1] | [180 -8 -1] | $\begin{pmatrix} 0 & 1 \\ -1 & 0 \end{pmatrix}$ $\begin{pmatrix} 1 & 0 \\ 0 & -1 \end{pmatrix}$ | $\begin{pmatrix} 1 & 0 & -1 \\ 2 & 0 & -2 \\ 1 & 0 & 1 \end{pmatrix}$ |

In the embodiment, when the gradient magnitude of the pixel in each cell is calculated, any gradient operator in Table 1 may be selected, or other gradient operator may also be selected. The selection of gradient operator in the embodiment is not specifically limited.

Given that the transverse gradient of the pixel (x, y) is H(x, y), and the longitudinal gradient of the pixel (x, y) is V(x, y), the gradient direction and the gradient magnitude of each pixel may be calculated by formula (1) and (2) as follow:

$$\theta(x, y) = \tan^{-1}[V(x, y)/H(x, y)] \qquad (1)$$

$$m(x, y) = [H(x, y)^2 + V(x, y)^2]^{1/2} \qquad (2)$$

wherein, θ(x,y) is the gradient direction of the pixel (x, y), and m(x, y) is the gradient magnitude of the pixel (x, y).

The gradient direction θ(x,y) belongs to a range of -90 degrees to 90 degrees. The gradient direction θ(x,y) is divided evenly into z portions, and all the pixels in each cell are counted based on weight m(x, y) in respective divided portion to get a z-dimensional vector for each cell finally, that is, the descriptor corresponding to each cell is obtained.

For example, the gradient direction θ(x,y) is divided evenly into 9 portions, and the angle corresponding to each portion is 20 degrees; and all the pixels in each cell are counted based on weight m(x, y) in respective 20-degrees to finally get a 9-dimentional vector for each cell.

In the embodiment, how many portions the gradient direction is divided into is not specifically limited.

In step 205, all the descriptor in each block are counted to get HOG characteristic of each block.

The terminal counts the descriptors obtained from respective cells contained in each block to get the HOG characteristic of each block.

When counting all the descriptors obtained from respective cells, the terminal may cascade the descriptors corresponding to respective cells so that the HOG characteristic of each block is a vector, wherein the dimension of the vector is k times of the dimension of the descriptor corresponding to the cells contained in the block.

For example, the descriptor in respective cell is a 9-dimensional vector, and each block includes 4 cells. The 9-dimensional descriptors in 4 cells are cascaded to form a 36-dimensional vector, which is served as the HOG characteristic of the corresponding block.

In step 206, the HOG characteristics of respective blocks in the frequency domain are counted to get the HOG characteristic of the image.

The terminal counts the HOG characteristics of respective blocks to get the HOG characteristic of the image. The HOG characteristics of respective blocks in the image are cascaded to form a matrix to get the HOG characteristic of the image, wherein each column of the matrix represents the HOG characteristic of one of the blocks.

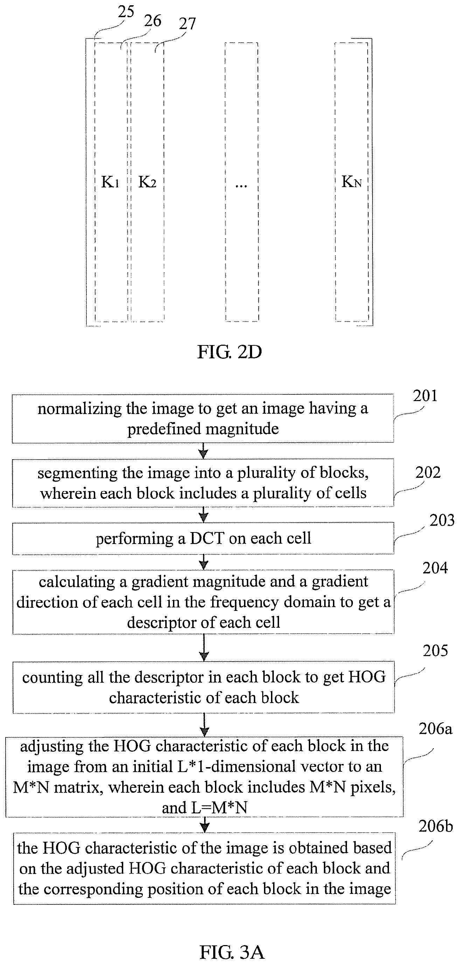

For example, the image includes K blocks, and the HOG characteristic of each block is $K_i$, and $K_i$ HOG characteristics are cascaded to form a matrix 250, wherein $K_1$ is placed at the first column 26 of the cascaded matrix, and $K_2$ is placed at the second column 27 of the cascaded matrix, and so on, as shown in FIG. 2D.

In summary, in the method for extracting characteristics according to the embodiment of the disclosure, by segmenting an image into a plurality of blocks, each block including a plurality of cells; performing a DCT or DFT on each cell; calculating a gradient magnitude and a gradient direction of each cell in the frequency domain to get a descriptor of each cell; counting respective descriptor of each block in the frequency domain to get HOG characteristic of each block; it can solve the problems in related art that the detection ratio and accuracy is relatively low in pattern recognition due to direct calculation of the spatial domain of the image in the procedure of extracting HOG characteristics; and it can achieve the effects of improving the detection ratio and accuracy in pattern recognition by extracting the HOG characteristics in the frequency domain.

In one embodiment shown in FIG. 2A, in the procedure of counting the HOG characteristics of each of blocks in the image to get the HOG characteristic of the image, they may be arranged in the form of the corresponding positions in the image. Step 206 may be alternatively implemented as step 206a and 206b, as shown in FIG. 3A.

In step 206a, the HOG characteristic of each block in the image is adjusted from an initial L*1-dimensional vector to an M*N matrix, wherein each block includes M*N pixels, and L=M*N.

The HOG characteristic of each block is the L*1-dimensional vector obtained by cascading the descriptors corresponding to each of cells, and the L*1-dimensional vector is adjusted to be the M*N matrix, that is, the terminal adjusts the L*1-dimensional vector of each block to be a corresponding matrix based on the included cells, wherein each column of the corresponding matrix represents the descriptor of one cell; and then adjusts the descriptors of each of cells based on the corresponding pixels, wherein each column of the adjusted matrix represents the HOG characteristic corresponding to the pixels of the corresponding column in the corresponding block.

In step 206b, the HOG characteristic of the image is obtained based on the adjusted HOG characteristic of each block and the corresponding position of each block in the image.

The HOG characteristic of the corresponding pixel position in the image is obtained based on the adjusted HOG characteristic of each block and the corresponding position of each block in the image.

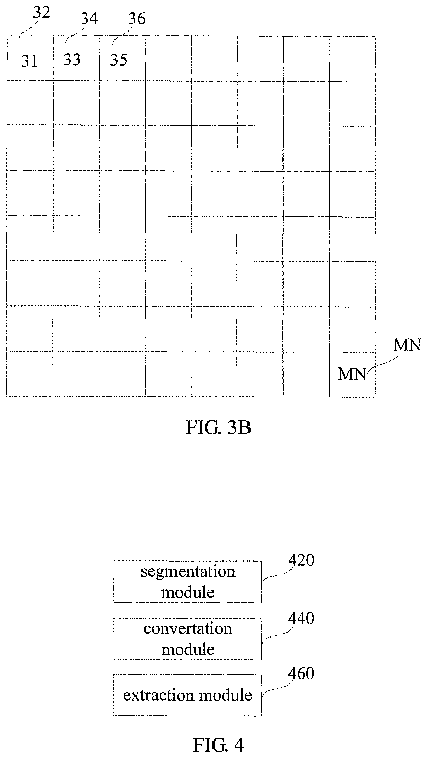

For example, the image includes K blocks, and HOG characteristic of each block is $K_i$, and $K_i$ HOG characteristics are adjusted to form an M*N matrix, wherein the adjusted matrix 31 of $K_1$ is placed at the position in the image corresponding to a first block 32, and the adjusted matrix 33 of $K_2$ is placed at the position in the image corresponding to a second block 34, and so on, the last matrix MN is placed at the position in the image corresponding to the last block MN, as shown in FIG. 3B.

In summary, in the method for extracting characteristics according to the embodiment of the disclosure, by adjusting the HOG characteristic of each block in the image from an initial L*1-dimensional vector to an M*N matrix, each block including M*N pixels, and L=M*N; obtaining the HOG characteristic of the image based on the adjusted HOG characteristic of each block and the corresponding position of each block in the image to get the HOG characteristic of the image; and enabling the extracted HOG characteristic of the image corresponding to the corresponding position of each block in the image, it can better highlight the characteristic of each block in the image.

The following are the device embodiments of the disclosure which may be used to perform the method embodiments of the disclosure. For the details not disclosed in the device embodiments, please see the method embodiments of the disclosure.

FIG. 4 is a block diagram illustrating a device for extracting characteristics according to an exemplary embodiment. As shown in FIG. 4, the device for extracting characteristics includes but not limited to the following modules.

A segmentation module 420 is configured to segment an image into a plurality of blocks, wherein each block includes a plurality of cells.

A conversion module 440 is configured to convert each cell from a spatial domain to a frequency domain; and the conversion module 440 is configured to convent each cell so that the image is converted from the spatial domain to the frequency domain.

An extraction module 460 is configured to extract a Histogram of Oriented Gradient (HOG) characteristic of the image in the frequency domain.

In summary, in the device for extracting characteristics according to the embodiment of the disclosure, by segmenting an image into a plurality of blocks, each block including a plurality of cells; converting each cell from a spatial domain to a frequency domain; and extracting a Histogram of Oriented Gradient (HOG) characteristic of the image in the frequency domain; it can solve the problems in related art that the detection ratio and accuracy is relatively low in pattern recognition due to direct calculation of the spatial domain of the image in the procedure of extracting HOG characteristics; and it can achieve the effects of improving the detection ratio and accuracy in pattern recognition by extracting the HOG characteristics in the frequency domain.

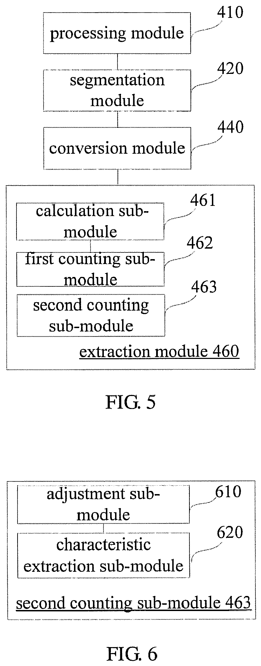

FIG. 5 is a block diagram illustrating a device for extracting characteristics according to another exemplary embodiment. As shown in FIG. 5, the device for extracting characteristics includes but not limited to the following modules.

A processing module 410 is configured to normalize the image to get an image having a predefined magnitude.

In the pattern recognition, it generally involves extracting characteristics from a plurality of images. Before extracting characteristics from the image, the processing module 410 firstly normalizes the image so that the images having different magnitudes may be transformed to the images having a predefined magnitude for purpose of processing uniformly the images.

The segmentation module 420 is configured to segment the image into a plurality of blocks, wherein each block includes a plurality of cells.

Alternatively, the segmentation module 420 may segment the image into a plurality of blocks, and then segment each block into a plurality of cells.

Alternatively, the segmentation module 420 may segment the image into a plurality of cells, and then compose a block by the neighboring cells, wherein each block includes a plurality of cells, for example, a block may be composed of four pairwise adjacent cells shaped like the shape of block 21 as shown in Fig. 2B.

In the procedure of the segmentation module 420 segmenting the image in the embodiment, the order of segmenting the image into blocks and segmenting the image into cells is not specifically limited. The image may be firstly segmented into blocks and then the blocks are segmented into cells, or the image may be firstly segmented into cells and then the cells compose respective block.

In the embodiment, it is not specifically limited whether there is an overlap between the blocks of the image segmented by the segmentation module 420. There may have an overlap between the blocks or there may not have an overlap between the blocks.

The conversion module 440 is configured to perform a discrete cosine transform (DCT) on each cell.

For each cell of the image, if a matrix *A* composed of pixels of each cell has a magnitude of M pixels * N pixels, the discrete cosine transform (DCT) coefficient of the matrix *A* is as the following formula:

$$
B_{p \cdot q} = \alpha_p \alpha_q \sum_{m=0}^{M-1} \sum_{n=0}^{N-1} A_{mn} \cos \frac{\pi(2m+1)p}{2M} \cos \frac{\pi(2n+1)q}{2N}
$$

wherein $\alpha_p = \begin{cases} 1/\sqrt{M}, p = 0 \\ \sqrt{2/M}, 1 \leq p \leq M-1 \end{cases}$, $\alpha_q = \begin{cases} 1/\sqrt{N}, q = 0 \\ \sqrt{2/N}, 1 \leq q \leq N-1 \end{cases}$, $B_{p \cdot q}$ is the DCT coefficient of the matrix *A*, p=0,1,2...,M-1, m=0,1,2 ... ,M-1, q=0,1,2... ,N-1, n=0,1,2 ... ,N-1.

The conversion module 440 may perform DCT on each cell of the image so that the image is converted from a spatial domain to a frequency domain.

Alternatively, the conversion module 440 is configured to perform a discrete Fourier transform (DFT) on each cell.

For each cell of the image, if each cell has a magnitude of M pixels * N pixels, the function of pixels (x, y) is f(x, y), the discrete cosine transform (DFT) coefficient F(u, v) of the function f(x, y) is as the following formula:

$$F(u,v) = \frac{1}{MN} \sum_{x=0}^{M-1} \sum_{y=0}^{N-1} f(x,y) e^{-j2\pi(ux/M+vy/N)}$$

wherein u=0,1,2 ... ,M-1, v=0,1,2 ... ,N-1.

The conversion module 440 may perform DFT on each cell of the image so that the image is converted from the spatial domain to the frequency domain.

The extraction module 460 is configured to extract a Histogram of Oriented Gradient (HOG) characteristic of the image in the frequency domain.

In an exemplary embodiment, the extraction module 460 may include the following sub-modules.

A calculation sub-module 461 is configured to calculate a gradient magnitude and a gradient direction of each cell in the frequency domain to get a descriptor of each cell.

The calculation sub-module 461 calculates a transverse gradient and a longitudinal gradient of each pixel in each cell, on which the DCT or DFT is performed, by using a gradient operator. The selection of gradient operator in the embodiment is not specifically limited.

Given that the transverse gradient of the pixel (x, y) is H(x, y), and the longitudinal gradient of the pixel (x, y) is V(x, y), the gradient direction and the gradient magnitude of each pixel may be calculated by formula (1) and (2) as follow:

$$\theta(x,y) = \tan^{-1}[V(x,y)/H(x,y)] \qquad (1)$$

$$m(x,y) = [H(x,y)^2 + V(x,y)^2]^{1/2} \qquad (2)$$

wherein, $\theta(x,y)$ is the gradient direction of the pixel (x, y), and m(x, y) is the gradient magnitude of the pixel (x, y).

The gradient direction $\theta(x,y)$ belongs to a range of -90 degrees to 90 degrees. The gradient direction $\theta(x,y)$ is divided evenly into z portions, and all the pixels in each cell are counted based on weight m(x, y) in respective divided portion to get a z-dimensional vector for each cell finally, that is, the descriptor corresponding to each cell is obtained.

In the embodiment, how many portions the gradient direction is divided into is not specifically limited.

A first counting sub-module 462 is configured to count respective descriptors of each block in the frequency domain to get a HOG characteristic of each block.

The first counting sub-module 462 counts the descriptors obtained from respective cells contained in each block to get the HOG characteristic of each block.

When counting all the descriptors obtained from respective cells, the first counting sub-module 462 may cascade the descriptors corresponding to respective cells so that the HOG characteristic of each block is a vector, wherein the dimension of the vector is k times of the dimension of the descriptor corresponding to the cells contained in the block.

A second counting sub-module 463 is configured to count the HOG characteristic of each block of the image in the frequency domain to get the HOG characteristic of the image.

The second counting sub-module 463 is configured to count the HOG characteristics of respective blocks to get the HOG characteristic of the image.

Alternatively, the second counting sub-module 463 is configured to cascade the HOG characteristics of respective blocks in the image to form a matrix to get the HOG characteristic of the image, wherein each column of the matrix represents the HOG characteristic of one of the blocks.

In summary, in the device for extracting characteristics according to the embodiment of the disclosure, by segmenting an image into a plurality of blocks, each block including a plurality of cells; performing a DCT or DFT on each cell; calculating a gradient magnitude and a gradient direction of each cell in the frequency domain to get a descriptor of each cell; counting respective descriptor of each block in the frequency domain to get HOG characteristic of each block; it can solve the problems in related art that the detection ratio and accuracy is relatively low in pattern recognition due to direct calculation of the spatial domain of the image in the procedure of extracting HOG characteristics; and it can achieve the effects of improving the detection ratio and accuracy in pattern recognition by extracting the HOG characteristics in the frequency domain.

In one embodiment shown in FIG. 5, the second counting sub-module 463 may include the following sub-modules, as shown in FIG. 6.

An adjustment sub-module 610 is configured to adjust the HOG characteristic of each block in the image from an initial L*1-dimensional vector to an M*N matrix, wherein each block includes M*N pixels, and L=M*N.

The HOG characteristic of each block is the L*1-dimensional vector obtained by cascading the descriptors corresponding to each of cells, and the adjustment sub-module 610 adjusts the L*1-dimensional vector to the M*N matrix, that is, the adjustment sub-module 610 adjusts the L*1-dimensional vector of each block to a corresponding matrix based on the included cells, wherein each column of the corresponding matrix represents the descriptor of one cell; and then adjusts the descriptors of each of cells based on the corresponding pixels, wherein each column of the adjusted matrix represents the HOG characteristic corresponding to the pixels of the corresponding column in the corresponding block.

A characteristic extraction sub-module 620 is configured to obtain the HOG characteristic of the image based on the adjusted HOG characteristic of each block and the corresponding position of each block in the image.

The characteristic extraction sub-module 620 is configured to obtain the HOG characteristic of the corresponding pixel position in the image based on the adjusted HOG characteristic of each block and the corresponding position of each block in the image.

In summary, in the device for extracting characteristics according to the embodiment of the disclosure, by adjusting the HOG characteristic of each block in the image from an initial L*1-dimensional vector to an M*N matrix, each block including M*N pixels, and L=M*N; obtaining the HOG characteristic of the image based on the adjusted HOG characteristic of each block and the corresponding position of each block in the image to get the HOG characteristic of the image; and enabling the extracted HOG characteristic of the image corresponding to the corresponding position of each block in the image, it can better highlight the characteristic of each block in the image.

With respect to the device in the above embodiments, the specific manners that the respective modules perform operations have been described in detail in the embodiments regarding the relevant methods, and will not be repeated herein.

In an exemplary embodiment of the disclosure, a device for extracting characteristics is provided, which can implement the method for extracting characteristics provided in the disclosure, the device for extracting characteristics may include: a processor; a memory for storing instructions executable by the processor; wherein the processor is configured to: segment an image into a plurality of blocks, each block including a plurality of cells; convert each cell from a spatial domain to a frequency domain; and extract a Histogram of Oriented Gradient (HOG) characteristic of the image in the frequency domain.

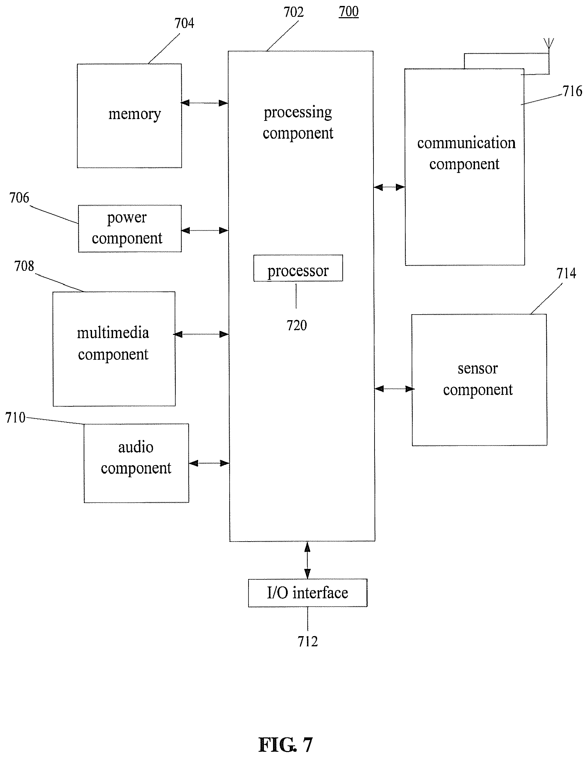

FIG. 7 is a block diagram of a device 700 for extracting characteristics according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714 and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have optical focusing and zooming capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components (e.g., the display and the keypad, of the device 700), a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of a nearby object without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for extracting characteristics.

In exemplary embodiments, there is also provided a non-transitory computer-readable storage medium including instructions, such as included in the memory 704, executable by the processor 718 in the device 700, for performing the above-described methods for extracting characteristics. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

**Claims**

1. A method for extracting characteristics, **characterized in** comprising:

   segmenting (102) an image into a plurality of blocks, wherein each block comprises a plurality of cells;
   converting (104) each cell from a spatial domain to a frequency domain; and
   extracting (106) a Histogram of Oriented Gradient (HOG) characteristic of the image in the frequency domain.

2. The method of claim 1, wherein said step of converting (104) each cell from the spatial domain to the frequency domain comprises: performing a discrete cosine transform (DCT) on each cell.

3. The method of claim 1, wherein said step of converting (104) each cell from the spatial domain to the frequency domain comprises: performing a discrete Fourier transform (DFT) on each cell.

4. The method of claim 2, wherein said step of extracting (106) the Histogram of Oriented Gradient (HOG) characteristic of the image in the frequency domain comprises:

calculating (204) a gradient magnitude and a gradient direction of each cell in the frequency domain to get a descriptor of each cell;

counting (205) respective descriptor of each block in the frequency domain to get a HOG characteristic of each block; and

counting (206) the HOG characteristic of each block of the image in the frequency domain to get the HOG characteristic of the image.

5. The method of claim 4, wherein said step of counting (206) the HOG characteristic of each block of the image to get the HOG characteristic of the image comprises:

cascading the HOG characteristic of each block in the image into a matrix to get the HOG characteristic of the image, wherein each column of the matrix represents the HOG characteristic of one of the blocks.

6. The method of claim 4, wherein said step of counting (206) the HOG characteristic of each block of the image to get the HOG characteristic of the image comprises:

adjusting (206a) the HOG characteristic of each block in the image from an initial L*1-dimensional vector to an M*N matrix, wherein each block comprises M*N pixels, and L=M*N; and

obtaining (206b) the HOG characteristic of the image based on the adjusted HOG characteristic of each block and corresponding position of the block in the image.

7. The method of any of claims 1-6, further comprising:

normalizing (201) the image to get an image having a predefined magnitude.

8. A device for extracting characteristics, **characterized in** comprising:

a segmentation module (420) configured to segment an image into a plurality of blocks, wherein each block comprises a plurality of cells;

a conversion module (440) configured to convert each cell from a spatial domain to a frequency domain; and

an extraction module (460) configured to extract a Histogram of Oriented Gradient (HOG) characteristic of the image in the frequency domain.

9. The device of claim 8, wherein the conversion module (440) is configured to perform a discrete cosine transform (DCT) on each cell.

10. The device of claim 8, wherein the conversion module (440) is configured to perform a discrete Fourier transform (DFT) on each cell.

11. The device of claim 9, wherein the extraction module (460) comprises:

a calculation sub-module (461) configured to calculate a gradient magnitude and a gradient direction of each cell in the frequency domain to get a descriptor of each cell;

a first counting sub-module (462) configured to count respective descriptor of each block in the frequency domain to get a HOG characteristic of each block; and

a second counting sub-module (463) configured to count the HOG characteristic of each block of the image in the frequency domain to get the HOG characteristic of the image.

12. The device of claim 11, wherein the second counting sub-module (463) is configured to cascade the HOG characteristic of each block in the image into a matrix to get the HOG characteristic of the image, wherein each column of the matrix represents the HOG characteristic of one of the blocks.

13. The device of claim 11, the second counting sub-module (463) comprises:

an adjustment sub-module (610) configured to adjust the HOG characteristic of each block in the image from an initial L*1-dimensional vector to an M*N matrix, wherein each block comprises M*N pixels, and L=M*N; and

a characteristic extraction sub-module (620) configured to obtain the HOG characteristic of the image based on the adjusted HOG characteristic of each block and corresponding position of the block in the image.

14. The device of any of claims 8-13, further comprising:

 a processing module (410) configured to normalize the image to get an image having a predefined magnitude.

15. A device for extracting characteristics, comprising:

 a processor (718); and
 a memory (704) for storing instructions executable by the processor (718);

**characterized in** wherein the processor (718) is configured to:

 segment an image into a plurality of blocks, wherein each block comprises a plurality of cells;
 convert each cell from a spatial domain to a frequency domain; and
 extract a Histogram of Oriented Gradient (HOG) characteristic of the image in the frequency domain.

segmenting an image into a plurality of blocks, wherein each block comprises a plurality of cells — 102

converting each cell from a spatial domain to a frequency domain — 104

extracting a Histogram of Oriented Gradient (HOG) characteristic of the image in the frequency domain — 106

FIG. 1

normalizing the image to get an image having a predefined magnitude — 201

segmenting the image into a plurality of blocks, wherein each block includes a plurality of cells — 202

performing a DCT on each cell — 203

calculating a gradient magnitude and a gradient direction of each cell in the frequency domain to get a descriptor of each cell — 204

counting all the descriptor in each block to get HOG characteristic of each block — 205

counting the HOG characteristics of respective blocks in the frequency domain to get the HOG characteristic of the image — 206

FIG. 2A

FIG. 2B

FIG. 2C

25  26  27

K1  K2  ...  KN

FIG. 2D

| 201 | normalizing the image to get an image having a predefined magnitude |

↓

| 202 | segmenting the image into a plurality of blocks, wherein each block includes a plurality of cells |

↓

| 203 | performing a DCT on each cell |

↓

| 204 | calculating a gradient magnitude and a gradient direction of each cell in the frequency domain to get a descriptor of each cell |

↓

| 205 | counting all the descriptor in each block to get HOG characteristic of each block |

↓

| 206a | adjusting the HOG characteristic of each block in the image from an initial L*1-dimensional vector to an M*N matrix, wherein each block includes M*N pixels, and L=M*N |

↓

| 206b | the HOG characteristic of the image is obtained based on the adjusted HOG characteristic of each block and the corresponding position of each block in the image |

FIG. 3A

32  34  36

| 31 | 33 | 35 | | | | | |
|----|----|----|---|---|---|---|---|
| | | | | | | | |
| | | | | | | | |
| | | | | | | | |
| | | | | | | | |
| | | | | | | | |
| | | | | | | | |
| | | | | | | | MN |

MN

FIG. 3B

| segmentation module | 420 |
|---|---|
| convertation module | 440 |
| extraction module | 460 |

FIG. 4

processing module — 410

segmentation module — 420

conversion module — 440

calculation sub-module — 461

first counting sub-module — 462

second counting sub-module — 463

extraction module 460

FIG. 5

adjustment sub-module — 610

characteristic extraction sub-module — 620

second counting sub-module 463

FIG. 6

**FIG. 7**

Europäisches
Patentamt

European
Patent Office

Office européen
des brevets

## EUROPEAN SEARCH REPORT

Application Number

EP 16 19 9236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 104 866 865 A (UNIV JIAOTONG SOUTHWEST) 26 August 2015 (2015-08-26) * paragraph [0013] - paragraph [0017] * * paragraphs [0026], [0046], [0061] * | 1-15 | INV. G06K9/46 G06K9/52 |
| A | WENLONG FU ET AL: "Multi-frequency transformation for edge detection", IMAGE AND VISION COMPUTING NEW ZEALAND, ACM, 2 PENN PLAZA, SUITE 701 NEW YORK NY 10121-0701 USA, 26 November 2012 (2012-11-26), pages 204-209, XP058030047, DOI: 10.1145/2425836.2425879 ISBN: 978-1-4503-1473-2 * sections 2 and 3 * | 1-15 | |
| A | RAKOTOMAMONJY ALAIN ET AL: "Histogram of Gradients of Time-Frequency Representations for Audio Scene Classifica", IEEE/ACM TRANSACTIONS ON AUDIO, SPEECH, AND LANGUAGE PROCESSING, IEEE, USA, vol. 23, no. 1, 1 January 2015 (2015-01-01), pages 142-153, XP011570040, ISSN: 2329-9290, DOI: 10.1109/TASLP.2014.2375575 [retrieved on 2015-01-14] * sections B and C * | 1-15 | |
| X,P | CN 105 654 093 A (BEIJING XIAOMI TECH CO LTD) 8 June 2016 (2016-06-08) * the whole document * | 1-15 | |

TECHNICAL FIELDS
SEARCHED (IPC)

G06K

The present search report has been drawn up for all claims

| Place of search | Date of completion of the search | Examiner |
|---|---|---|
| The Hague | 7 April 2017 | Wunderlich, Doreen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 19 9236

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2017

| Patent document cited in search report | | Publication date | Patent family member(s) | Publication date |
|---|---|---|---|---|
| CN 104866865 | A | 26-08-2015 | NONE | |
| CN 105654093 | A | 08-06-2016 | NONE | |

EPO FORM P0459

For more details about this annex : see Official Journal of the European Patent Office, No. 12/82